# EUROPEAN PATENT APPLICATION

(11) **EP 4 742 757 A1**
(43) Date of publication of application: **13.05.2026**
(21) Application number: 25210283.5
(22) Date of filing: 22.10.2025
(51) Int. Cl.: H04W 36/00, H04W 36/36, H04W 56/00, H04W 74/0833

(54) **TIMING ADVANCE PROVISIONING FOR CONDITIONAL CELL SWITCH EXECUTION**

(30) Priority: 07.11.2024 US 202463717366 P
(71) Applicant: Nokia Technologies Oy, 02610 Espoo (FI)
(72) Inventor: KAKKAVAS, Anastasios, Munich (DE); GOYAL, Sanjay, Denville (US); GÜRSU, Halit Murat, Munich (DE); SPAPIS, Panagiotis, Munich (DE); ASHRAF, Shehzad Ali, Munich (DE); PALKA, Dariusz, Krakow (PL)
(74) Representative: Nokia EPO representatives

(57) **Abstract**

A method performed by a user equipment (UE) is provided. The method includes receiving, from a source cell, an order for early timing advance (TA) acquisition for at least one candidate cell indicated in the order. The method includes making a determination that the at least one candidate cell is at least one conditional lower-layer triggered mobility (CLTM) candidate cell. The method includes monitoring for at least one TA value for the at least one CLTM candidate cell based on the determination. And the method includes receiving the at least one TA value.

## Description

### TECHNOLOGICAL FIELD

The present disclosure relates generally to telecommunications and, in particular, to conditional cell switch in a telecommunications system.

### BACKGROUND

A telecommunications system can be seen as a facility that enables communication sessions between two or more entities such as user terminals, base stations and/or other nodes by providing carriers between the various entities involved in the communications path. A telecommunications system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

In a wireless telecommunications system, at least a part of a communication session between at least two stations occurs over a wireless link. Examples of wireless telecommunications systems comprise public land mobile networks (PLMN), satellite based communication systems and different wireless local networks, for example wireless local area networks (WLAN). Some wireless systems can be divided into cells, and are therefore often referred to as cellular systems.

A user can access the telecommunications system by means of an appropriate communication device or terminal. A communication device of a user may be referred to as user equipment (UE) or user device. A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

The telecommunications system and associated devices typically operate in accordance with a given standard or specification which sets out what the various entities associated with the communication system are permitted to do and how operations should be achieved. Communication protocols and/or parameters which shall be used for connection of the various entities are also typically defined. One example of a telecommunications system is the Universal Mobile Telecommunications System (UMTS). Other examples of telecommunications systems are Long-Term Evolution (LTE), LTE Advanced and the so-called 5G or New Radio (NR) networks. NR is being standardized by the 3rd Generation Partnership Project (3GPP).

### BRIEF SUMMARY

Example implementations of the present disclosure are directed to telecommunications and, in particular, to conditional cell switch in a telecommunications system. The present disclosure includes, without limitation, the following example implementations.

Some example implementations provide an apparatus to implement a user equipment (UE), the apparatus comprising: at least one memory configured to store instructions; and at least one processing circuitry configured to access the at least one memory, and execute the instructions to cause the apparatus to at least: receive, from a source cell, an order for early timing advance (TA) acquisition for at least one candidate cell indicated in the order; make a determination that the at least one candidate cell is at least one conditional lower-layer triggered mobility (CLTM) candidate cell; monitor for at least one TA value for the at least one CLTM candidate cell based on the determination; and receive the at least one TA value.

Some example implementations provide a method performed by a user equipment (UE), the method comprising: receiving, from a source cell, an order for early timing advance (TA) acquisition for at least one candidate cell indicated in the order; making a determination that the at least one candidate cell is at least one conditional lower-layer triggered mobility (CLTM) candidate cell; monitoring for at least one TA value for the at least one CLTM candidate cell based on the determination; and receiving the at least one TA value.

Some example implementations provide an apparatus comprising: at least one memory configured to store instructions; and at least one processing circuitry configured to access the at least one memory, and execute the instructions to cause the apparatus to at least: send, to a user equipment (UE), an order for early timing advance (TA) acquisition for at least one candidate cell indicated in the order; receive at least one TA value for the at least one candidate cell; make a determination that the at least one candidate cell is at least one conditional lower-layer triggered mobility (CLTM) candidate cell; and send the at least one TA value for the at least one CLTM candidate cell to the UE based on the determination.

Some example implementations provide a method comprising: sending, to a user equipment (UE), an order for early timing advance (TA) acquisition for at least one candidate cell indicated in the order; receiving at least one TA value for the at least one candidate cell; making a determination that the at least one candidate cell is at least one conditional lower-layer triggered mobility (CLTM) candidate cell; and sending the at least one TA value for the at least one CLTM candidate cell to the UE based on the determination.

Some example implementations provide an apparatus comprising: at least one memory configured to store instructions; and at least one processing circuitry configured to access the at least one memory, and execute the instructions to cause the apparatus to at least: receive a random access (RA) preamble from a user equipment (UE) for an early timing advance (TA) acquisition for at least one candidate cell; determine at least one TA value for the at least one candidate cell; make a determination that the at least one candidate cell is at least one conditional lower-layer triggered mobility (CLTM) candidate cell; and send a random access response (RAR) including the at least one TA value for the at least one CLTM candidate cell to the UE based on the determination.

Some example implementations provide a method comprising: receiving a random access (RA) preamble from a user equipment (UE) for an early timing advance (TA) acquisition for at least one candidate cell; determining at least one TA value for the at least one candidate cell; making a determination that the at least one candidate cell is at least one conditional lower-layer triggered mobility (CLTM) candidate cell; and sending a random access response (RAR) including the at least one TA value for the at least one CLTM candidate cell to the UE based on the determination.

These and other features, aspects, and advantages of the present disclosure will be apparent from a reading of the following detailed description together with the accompanying figures, which are briefly described below. The present disclosure includes any combination of two, three, four or more features or elements set forth in this disclosure, regardless of whether such features or elements are expressly combined or otherwise recited in a specific example implementation described herein. The present disclosure is intended to be read holistically such that any separable features or elements of the disclosure, in any of its aspects and example implementations, should be viewed as combinable unless the context of the disclosure clearly dictates otherwise.

It will therefore be appreciated that this Brief Summary is provided merely for purposes of summarizing some example implementations so as to provide a basic understanding of some aspects of the disclosure. Accordingly, it will be appreciated that the above described example implementations are merely examples and should not be construed to narrow the scope or spirit of the disclosure in any way. Other example implementations, aspects and advantages will become apparent from the following detailed description taken in conjunction with the accompanying figures which illustrate, by way of example, the principles of some described example implementations.

### BRIEF DESCRIPTION OF THE FIGURE(S)

Having thus described example implementations of the disclosure in general terms, reference will now be made to the accompanying figures, which are not necessarily drawn to scale, and wherein:
FIG. 1 illustrates a telecommunications system that includes one or more public land mobile networks (PLMNs) coupled to one or more external data networks, according to some example implementations of the present disclosure;
FIG. 2 illustrates a 5G NR deployment of a PLMN, according to some example implementations;
FIGS. 3A and 3B illustrate a signaling chart for conditional lower-layer triggered mobility (CLTM) in which timing advance (TA) information for current CLTM candidate cells is provided to a user equipment (UE) by a source, according to some example implementations;
FIGS. 4A and 4B illustrate a signaling chart for CLTM in which TA information for current CLTM candidate cells is provided to a UE by a target, according to some example implementations;
FIGS. 5A and 5B illustrate a signaling chart for CLTM in which TA information for current and subsequent CLTM candidate cells is provided to a UE by a source, according to some example implementations;
FIGS. 6A and 6B illustrate a signaling chart for CLTM in which TA information for current and subsequent CLTM candidate cells is provided to a UE by a target, according to some example implementations;
FIGS. 7A, 7B and 7C are flowcharts illustrating various steps in a method according to various example implementations;
FIGS. 8A, 8B, 8C and 8D are flowcharts illustrating various steps in a method according to various example implementations;
FIGS. 9A, 9B and 9C are flowcharts illustrating various steps in a method according to various example implementations; and
FIG. 10 illustrates an apparatus according to some example implementations.

### DETAILED DESCRIPTION

Some implementations of the present disclosure will now be described more fully hereinafter with reference to the accompanying figures, in which some, but not all implementations of the disclosure are shown. Indeed, various implementations of the disclosure may be embodied in many different forms and should not be construed as limited to the implementations set forth herein; rather, these example implementations are provided so that this disclosure will be thorough and complete, and will fully convey the scope of the disclosure to those skilled in the art. Like reference numerals refer to like elements throughout.

Unless specified otherwise or clear from context, references to first, second or the like should not be construed to imply a particular order. A feature described as being above another feature (unless specified otherwise or clear from context) may instead be below, and vice versa; and similarly, features described as being to the left of another feature else may instead be to the right, and vice versa. Also, while reference may be made herein to quantitative measures, values, geometric relationships or the like, unless otherwise stated, any one or more if not all of these may be absolute or approximate to account for acceptable variations that may occur, such as those due to engineering tolerances or the like.

As used herein, unless specified otherwise or clear from context, the "or" of a set of operands is the "inclusive or" and thereby true if and only if one or more of the operands is true, as opposed to the "exclusive or" which is false when all of the operands are true. Thus, for example, "[A] or [B]" is true if [A] is true, or if [B] is true, or if both [A] and [B] are true. Further, the articles "a" and "an" mean "one or more," unless specified otherwise or clear from context to be directed to a singular form. Furthermore, it should be understood that unless otherwise specified, the terms "data," "content," "digital content," "information," and similar terms may be at times used interchangeably. The term "network" may refer to a group of interconnected computers including clients and servers; and within a network, these computers may be interconnected directly or indirectly by various means including via one or more switches, routers, gateways, access points or the like.

The present disclosure discusses systems and architectures that, while specific terms may be used, are broadly applicable across various technologies. For instance, while the present disclosure may reference technologies from 3GPP such as Global System for Mobile Communications (GSM), UMTS, LTE, LTE Advanced, 5G NR, 5G Advanced, and 6G, the present disclosure is equally relevant to non-3GPP technologies like IEEE 802, Bluetooth, and Bluetooth Low Energy. Example implementations of the present disclosure described herein also mention public land mobile networks (PLMNs) and mobile network operators (MNOs), but example implementations are similarly applicable to standalone non-public networks (SNPNs) and the private entities operating these networks. Furthermore, although some examples and figures focus on radio access networks (RANs) and 3GPP access, example implementations are applicable to any type of network access. This includes not only 5G or 6G 3GPP access but also non-3GPP access, such as wireline access, untrusted non-3GPP access, and trusted non-3GPP access using wireless access gateway function (W-AGF), non-3GPP interworking function (N3IWF), or trusted non-3GPP gateway function (TNGF) to connect to a 5G or 6G core network.

Further, as used in this application, the term "circuitry" may refer to one or more or all of the following: (a) hardware-only circuit implementations (such as implementations in only analog and/or digital circuitry); (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); or (c) hardware circuit(s) and/or processor(s), such as a microprocessor(s) or a portion of a microprocessor(s), that requires software (e.g., firmware) for operation, but the software may not be present when it is not needed for operation.

The above definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

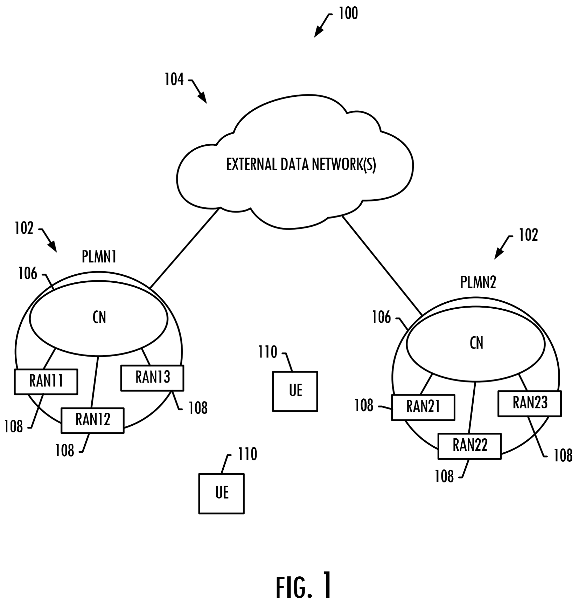

FIG. 1 illustrates a telecommunications system **100** according to various example implementations of the present disclosure. The telecommunications system generally includes one or more telecommunications networks. As shown, for example, the system includes one or more PLMNs **102** coupled to one or more other external data networks **104** - notably including a wide area network (WAN) such as the Internet. As will be appreciated, a PLMN may be deployed in a number of different manners. Some deployments of 4G LTE and 5G NR in particular are considered standalone (SA) deployments. Other deployments combine 4G LTE and 5G technologies, and are referred to as non-standalone (NSA) deployments.

Each of the PLMNs **102** includes a core network (CN) **106** backbone, such as the Evolved Packet Core (EPC) of 4G LTE, and the 5G core network (5GC) (at times referred to as the NGC) of 5G NR; and each of the core networks and the Internet are coupled to one or more RANs **108,** air interfaces or the like that implement one or more radio access technologies (RATs). Examples of these RANs include the evolved UMTS terrestrial radio access network (E-UTRAN) of 4G LTE, and the next generation (NG) radio access network (NG-RAN) of 5G NR. As used herein, a "network device" refers to any suitable device at a network side of a telecommunications network. Examples of suitable network devices are described in greater detail below.

Examples of RATs include 3GPP radio access technologies such as GSM, CDMA2000 1xEV-DO (HRPD), CDMA2000 1x (1xRTT), UTRA, E-UTRA, 5G NR, 5G Advanced, and 6G. Other examples of RATs include IEEE 802 technologies such as IEEE 802.11 (Wi-Fi), IEEE 802.15 (including 802.15.1 (WPAN/Bluetooth), 802.15.4 (Zigbee) and 802.15.6 (WBAN)), Bluetooth, Bluetooth Low Energy (BLE), ultra wideband (UWB), and the like. Generally, a RAT may refer to any 2G, 3G, 4G, 5G, 6G or higher generation RAT and their different versions, as well as to any other RAT that may be arranged to interwork with such a mobile communication technology to provide access to the CN **106** of a MNO.

The telecommunications system **100** also includes one or more radio units that may be varyingly known as user equipment (UE) **110,** terminal device, terminal equipment, mobile station or the like. The UE is generally a device configured to communicate with a network device or a further UE in a telecommunications network. The UE may be a portable computer (e.g., laptop, notebook, tablet computer), mobile phone (e.g., cell phone, smartphone), wearable computer (e.g., smartwatch), or the like. In other examples, the UE may be an Internet of things (IoT) device, an industrial IoT (IIoT device), a vehicle equipped with a vehicle-to-everything (V2X) communication technology, or the like. In some examples, as referenced by 3GPP, the UE may be a narrowband IoT (NB-IoT) device, an enhanced machine-type communication (eMTC) device, a reduced capability (RedCap) device, an ambient IoT device, or the like.

In operation, these UEs **110** may connect to one or more of the RANs **108** according to their particular RATs to thereby access a particular CN **106** of a PLMN **102,** or to access one or more of the external data networks **104** (e.g., the Internet). The external data network may provide Internet access, operator services, 3rd party services, etc. For example, the International Telecommunication Union (ITU) has classified 5G mobile network services into three categories: enhanced mobile broadband (eMBB), ultra-reliable and low-latency communications (URLLC), and massive machine type communications (mMTC) or massive internet of things (MIoT).

In various examples, a RAN **108** may be configured as one or more macrocells, microcells, picocells, femtocells or the like. The RAN may generally include one or more radio access nodes that interact with UEs **110.** In various examples, a radio access node may be referred to as a base station (BS), access point (AP), base transceiver station (BTS), Node B (NB), evolved NB (eNB), macro BS, NB (MNB) or eNB (MeNB), home BS, NB (HNB) or eNB (HeNB), next generation NB (gNB), enhanced gNB (en-gNB), next generation eNB (ng-eNB), or the like. The term 'gNB' in 5G NR may correspond to the eNB in 4G LTE. Also, a NG-RAN node may refer to a gNB or a ng-eNB.

The RAN **108** may include some type of network controlling/governing entity responsible for control of the radio access nodes. The network controlling/governing entity and radio access node may be separate or integrated into a single apparatus. The network controlling/governing entity may include processing circuity configured to carry out various management functions, etc. The processing circuity may be associated with a memory, computer-readable storage medium or database for maintaining information required in the management functions.

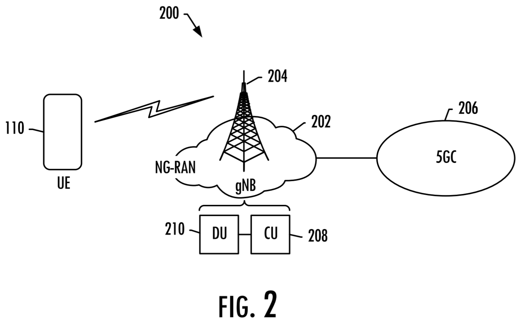

FIG. 2 illustrates a 5G NR deployment **200,** referred to at times as the 5G system (5GS). As shown, the NG-RAN **202** includes one or more gNBs **204** configured to connect one or more UEs **110** to the NG-RAN to thereby access the 5GC **206.** In some deployments, operations of a gNB or other a radio access node may be distributed or functionally split into components including one or more remote radio head (RRHs) or radio units (RUs), and a baseband unit (BBU); and in some architectures, the BBU may be split into a central/centralized unit (CU) **208** (central node) and a distributed unit (DU) **210** (distributed node). The CU may be, for example, a server, host or node. In some architectures, the RRH/RU and DU may be collocated. It is also possible that node operations may be distributed among a plurality of servers, hosts or nodes.

It should also be understood that the distribution of work between core network operations and radio access node operations may vary depending on implementation. A 5G network architecture may be based on a so-called CU-DU split. One gNB-CU (a CU 208) may control one or more gNB-DUs (DUs **210**). The gNB-CU may control a plurality of spatially separated gNB-DUs, acting at least as transmit/receive (Tx/Rx) nodes. In some example implementations, however, the gNB-DUs may include, for example, a radio link control (RLC), medium access control (MAC) layer and a physical (PHY) layer, whereas the gNB-CU may include the layers above the RLC layer, such as a packet data convergence protocol (PDCP) layer, a radio resource control (RRC), and an internet protocol (IP) layer. Other functional splits are also possible. It is considered that skilled person is familiar with the OSI model and the functionalities within each layer.

In some example implementations, the server or CU **208** may generate a virtual network through which the server communicates with the radio node. In general, virtual networking may involve a process of combining hardware and software network resources and network functionality into a single, software-based administrative entity, a virtual network. Such virtual network may provide flexible distribution of operations between the server and the radio head/node. In practice, any digital signal processing task may be performed in either the CU or the DU **210,** and the boundary where the responsibility is shifted between the CU and the DU may be selected according to implementation.

Currently in 3GPP, mainstream mobility has been conducted using higher layer mobility, such as layer 3 (L3) or RRC controlled mobility. In this regard, L3 handover based mobility is a well-known and proven method for ensuring a robust way of handing over the UE **110** from one serving cell (source cell) of a gNB **204** to a new serving cell (target cell) of the same or another gNB. The method has been used at least since GSM and is still in use in 5G NR. It is expected that L3 mobility (legacy handover) will also be commonly used in the future.

L1/L2-triggered mobility, or lower-layer triggered mobility (LTM) moves the execution of the 'handover' from one cell to another from higher layers (L3), such as RRC, to lower layers. These lower layers may be either PHY (or layer 1 - (L1)) or MAC (or layer 2 (L2)). In LTM, the network (NG-RAN **202**) configures the UE **110** with up to eight candidate cells, and eventually sends a cell switch command to the UE to perform a cell switch to a target cell among the candidate cells. The cell switch decision may be based on L1 or L3 measurements reported by the UE. In a CU-DU split architecture, LTM may support one or more of intra-DU mobility, intra-CU inter-DU mobility, or inter-CU inter-DU mobility.

LTM may reduce latency, overhead and interruption time when compared to L3 handover based mobility. he reduced latency in LTM is achieved at least in part through different early procedures, including early downlink (DL) synchronization through early transmission configuration indicator (TCI) state activation, early uplink (UL) synchronization through physical downlink control channel (PDCCH)-ordered random access channel (RACH) or UE-based timing advance (TA) estimation, and early abstract syntax notation one (ASN.1) decoding and validity check.

LTM supports early DL synchronization through early TCI state activation for one or more candidate cells before the cell switch command. The network may sends candidate cell specific MAC control element (CE) to activate one or more TCI states for a candidate cell. If the network wants to activate TCI states for more than one candidate cell, the network may send a separate MAC CE for each of those cells. At the time of receiving the TCI state activation MAC CE, the UE **110** may performs DL synchronization with one or more synchronization signal blocks (SSBs) or tracking reference signals (TRSs) associated to the target TCI state(s).

When TCI state is considered active and the UE **110** has DL synchronization of the target TCI state, cell switch delay does not include time for DL synchronization. When TCI state is not on the active TCI state list or when the UE does not have DL synchronization of the target TCI state, the UE may be allowed time to perform DL synchronization during the cell switch.

LTM supports early UL synchronization/TA acquisition in a number of different manners. As indicated above, LTM supports early UL synchronization/TA acquisition through PDCCH-ordered RACH transmission. In this regard, the network may send a PDCCH order to the UE **110** for candidate cell(s), and UE may perform RACH transmission on those cell(s) before the cell switch. The candidate cell(s) may send the TA value(s) to the source cell, which may then give the TA value for a target cell among the candidate cell(s) to the UE in a cell switch command. The UE may then apply the TA value for the first UL transmission on the target cell, and hence perform a RACH-less cell switch to the target cell.

LTM may also support early UL synchronization/TA acquisition through UE autonomous TA estimation. The network may configure the UE **110** to autonomously estimate the TA for one or more candidate cells. And when the UE receives a cell switch command for a target cell among the candidate cell(s) without a TA value for the target cell, the UE may apply the UE-estimated TA for the first UL transmission and hence perform RACH-less cell switch. In another manner of supporting early UL synchronization/TA acquisition, the network may also use the serving cell TA or give TA = 0 value in the cell switch command, which may also lead to a RACH-less cell switch. And if UL synchronization/TA acquisition is not performed, the UE may perform RACH-based cell switch, i.e., perform RACH procedure after receiving the cell switch command.

LTM was introduced in 3GPP Release 18 and offers improvements in handover latency and interruption time compared to L3 mobility. But LTM as introduced also has a number of limitations relative to L3 mobility. A number of enhancements of LTM are currently under discussion to address these limitations. One of the enhancements under discussion is support for conditional LTM (CLTM or C-LTM). The details of CLTM are currently under discussion, but it has been agreed that at least the baseline of conditional handover CHO will be reused. In this regard, the UE **110** may be configured with one or more (L1 or L3 based) conditions for one or more candidate cells or RSs associate with one or more candidate cells. The conditions can be provided in the common LTM configuration or can be candidate cell / reference signal (RS) specific. At the event of such condition becoming met, the UE may execute a CLTM cell switch to a candidate cell for which the condition was met.

An updated work item description includes the objective to specify support for conditional intra-CU LTM. This includes, specification of UE-evaluated conditions for triggering LTM, an aim to support CLTM including subsequent LTM, and limit specifying the CLTM to the scenario in which the UE is in non-dual connectivity.

For 3GPP Release 19 CLTM, procedures defined in 3GPP Release 18 LTM, which is based on network-triggered cell switch, may need enhancement to support UE-autonomous cell switch triggering. In addition, although Release 19 is intended to support only conditional intra-CU LTM, further enhancements of the LTM feature to support conditional inter-CU LTM may follow in subsequent releases. A number of other agreements have also been made with respect to CLTM, including random access response (RAR)-based TA acquisition is not supported for inter-CU LTM for non-conditional LTM. The DU will generate the L1 execution condition. And PDCCH-ordered early TA acquisition is supported for CLTM.

In addition, in Release 18, before it was decided that the no RAR option would be used (i.e., that the TA would be provided to the UE only with the cell switch command), it was agreed that for the PDCCH-ordered RACH mechanism in Release 18 LTM, when reception of RAR is configured, the UE stores (or otherwise, remembers, maintains, handles) a TA for at least one candidate cell, and that storing corresponding TAs for more than one candidate cell is up to UE capability. It was also agreed that the number of candidate cells is up to UE capability.

From the network perspective, the execution condition for CLTM may be provided by the serving or source gNB **204,** similar to CHO. When the execution condition is provided based on L3 measurement, the gNB-CU **208** may generate the LTM event configuration for each LTM candidate cell. When the execution condition is provided based on L1 measurement, the gNB-DU **210** may generate the LTM event configuration. In this case, when the serving gNB **204** (CU) decides to prepare an LTM candidate cell, the serving gNB may request its gNB-DU to prepare the execution condition for each LTM candidate cell. The serving gNB (DU) may generate the condition for the LTM candidate cell, and send the condition to serving gNB (CU). The serving gNB (CU) may then generate the final RRC reconfiguration message with conditional LTM configuration, and send the conditional LTM configuration to the UE via a RRC reconfiguration message.

As indicated above, the current intent is that Release 19 will support only conditional intra-CU LTM. Based on the abovementioned agreements, however, it is unclear whether RAR/TA information should be provided to the UE **110** for an inter-CU candidate cell which is configured for CLTM (for subsequent conditional intra-CU cell switch(es)). It is also unclear from which node RAR/TA information should be provided to the UE (source which is the current serving cell or target which becomes the serving cell after the cell switch). The UE behavior is therefore unclear about when the UE should monitor for RAR/TA information associated with a candidate cell from the target or the source.

Furthermore, depending on the decided rule for providing RAR/TA information to the UE **110,** the serving gNB-DU **210** may not have sufficient information to decide whether to provide RAR/TA information. More specifically, if the RAR provision rule depends on whether the candidate cell is intra- or inter-CU, the serving gNB-DU may not be able to decide as the serving gNB-DU may not have that information. In addition, for both intra- and inter-CU setups, if the CLTM conditions are configured by the gNB-CU **208,** as may be the case for L3 measurement-based CLTM execution, the gNB-DU may not be aware that CLTM has been configured for a candidate and, therefore, the gNB-DU will not provide RAR/TA information for that candidate.

Example implementations of the present disclosure therefore provide solutions to the problem in which RAR/TA information may be provided from the source or target, and the RAR/TA information may be for one or more CLTM candidate cells, each of which is either a current CLTM candidate cell or a subsequent CLTM candidate cell.

According to example implementations, a current CLTM candidate cell is a candidate cell for which the UE **110** has been configured with condition(s) that, when determined to be satisfied by the UE, trigger the UE to perform a conditional LTM cell switch from the current serving cell to the candidate cell, and to which the UE is allowed to perform a conditional LTM cell switch from the current serving cell (i.e., the UE has started or may start evaluating the associated condition). A current CLTM candidate cell may be an intra-CU candidate cell for which a condition has been configured which when satisfied, the UE is triggered to switch from the current serving to the candidate. But an inter-CU candidate cell for which a condition has been configured which when satisfied, the UE is triggered to switch from the current serving to the candidate cell is not a current CLTM candidate cell in Release 19, because, although a condition has been configured, an inter-CU CLTM switch is not allowed in Release 19.

A subsequent CLTM candidate cell is a candidate cell, which is not a current CLTM candidate cell, and for which the UE **110** has been configured with condition(s) that, when determined to be satisfied by the UE, trigger the UE to perform a conditional LTM cell switch from another candidate cell (e.g., UE's serving cell after at least one cell switch) to the candidate cell, and to which the UE is allowed to perform a conditional LTM cell switch from the another candidate cell (i.e., the UE may start evaluating the associated condition when served by the other candidate cell). As an example, a subsequent CLTM candidate cell may be an inter-CU candidate cell A for which a condition has been configured which when satisfied, the UE is triggered to switch from another inter-CU candidate cell B which is under the same CU as cell A, to cell A. After an inter-CU cell switch, a subsequent CLTM candidate cell may become a current CLTM candidate cell.

Example implementations of the present disclosure define rules for providing RAR/TA information based on whether the candidate cell is a current or subsequent CLTM candidate, and include signaling so that the involved entities can determine whether the candidate cell is a current or subsequent CLTM candidate. Some example implementations consider two options, where the differentiating characteristic is whether RAR/TA information is provided for a subsequent CLTM candidate cell. Relevant factors on which option may be used include whether the UE **110** keeps the acquired TAs (and their corresponding maintenance quantities, e.g., time alignment timer (TAT), reference signal received power (RSRP) measurements) after a cell switch. Relevant factors may also include the UE capability on how many TA values the UE can store and maintain.

As a first option, RAR/TA information may be provided only for current CLTM candidate cells, and may be provided from the source or the target. In some examples in which the RAR/TA information is provided from the source, the UE may receive a PDCCH order for early TA acquisition and transmits a RA preamble to the indicated candidate cell.

The UE **110** may check whether the candidate cell indicated in the PDCCH order is a current CLTM candidate cell. In some examples, the UE may check if the candidate cell indicated in the PDCCH order is configured as a CLTM candidate, that is, if condition(s) for performing a conditional LTM cell switch from the current serving cell to that cell is provided in the LTM configuration. In this regard, the configuration of a cell as a CLTM candidate may be serving cell-specific or serving cell-independent.

In some examples, the UE **110** may check whether the candidate cell is an intra- or inter-CU, such as by comparing the serving cell ID with the candidate cell ID (e.g., Release 19 cell IDs). In some of these examples, the configuration of a cell as a CLTM candidate for the current serving cell may indicate that the cell is intra-CU. This may be the case, for example, when the CLTM candidates are serving cell-specific. In that case, the UE only needs to check whether the cell has been configured as a CLTM candidate (for the current serving cell).

In another example, whether the candidate cell indicated in the PDCCH order is a current CLTM candidate cell may be indicated in the PDCCH order, such as by a one-bit flag, which may be one of the reserved fields. This may indicate the UE should monitor for reception of RAR/TA information from the source.

If the candidate cell indicated in the PDCCH order is a current CLTM candidate cell (i.e., condition configured for current serving and switch allowed), the UE **110** may monitor for reception of RAR/TA information from the source. And in some examples, the search space the UE monitors for obtaining the RAR/TA information may depend on the used container.

Like the UE **110,** the serving or source gNB-DU **210** may also determine whether a candidate cell is a current CLTM candidate. To make this determination, in some examples, the serving gNB-DU may receive information from the serving gNB-CU **208** about whether a cell is configured to the UE **110** as a current CLTM candidate for the current serving cell and other candidate cells under the serving gNB-DU (since these other candidate cells may later become serving cells). In other words, for each cell (source or candidate) under the serving gNB-DU, the serving gNB-DU may receive information about which candidate cells have been configured as CLTM candidates. In some examples, this information may be provided only for intra-CU candidate cells.

Additionally or alternatively, in some examples, the serving gNB-DU may receive information from the serving gNB-CU **208** about whether a candidate cell is intra- or inter-CU for each candidate cell, such as by providing an ID (e.g., Release 19 set ID) of the candidate cell or a flag indicating intra- or inter-CU cell. This information may be provided to every involved gNB-DU (source and candidate(s)) to support subsequent cell switches, i.e., to be used if a candidate gNB-DU (C-DU) becomes serving DU.

Based on the information received by the serving gNB-DU **210** from the serving gNB-CU **208,** and the ID of the candidate cell for which TA information has been received from the serving gNB-CU, the serving gNB-DU may determine whether the candidate cell for which TA information has been received is a current CLTM candidate; and if so, the serving or source gNB-DU may provide RAR/TA information to the UE **110.**

In other examples of the first option, the RAR/TA information may be provided only for current CLTM candidate cells, and may be provided from the target. In some of these examples, as before, the UE **110** may receive a PDCCH order for early TA acquisition and transmits a RA preamble to the indicated candidate cell. Also similar to before, the UE may check if the candidate cell indicated in the PDCCH order is a current CLTM candidate cell; and if so, the UE may monitor for reception of a RAR from the target. And again, in one example, whether the candidate cell indicated in the PDCCH order is a current CLTM candidate cell may be indicated in the PDCCH order, such as by a one-bit flag, which may be one of the reserved fields, and may indicate the UE should monitor for reception of RAR/TA information from the source.

In these other examples, a candidate gNB-DU **210** (C-DU) may also determine whether a candidate cell is a current CLTM candidate. To make this determination, in some examples, for each cell supported by the C-DU, the C-DU may be provided with a list of candidate cells for which at least one CLTM condition has been configured for a cell switch from the candidate cell to the cell supported by the C-DU. The C-DU may also be provided with information about an allocation of contention free random access (CFRA) preambles to UEs **110** from the serving or source gNB-DU (S-DU), which may allow the C-DU to identify the UE.

Additionally or alternatively, in some examples, the candidate gNB-DU 210 (C-DU) may receive information from the serving gNB-CU **208** about whether the current serving cell of the UE **110** is intra- or inter-CU. This information may be provided again to all C-DUs every time the serving cell changes or every time an inter-CU cell change occurs. In some examples, the information may be a flag indicating intra- or inter-CU serving cell. In some other examples, the information may be the ID of the current serving cell (e.g., global cell identity (GCI), candidate ID - if configured as candidate). The ID may be combined with information about whether a candidate cell is intra- or inter-CU for each candidate cell, such as by providing the Release 19 set ID of the candidate cell or a flag indicating intra- or inter-CU cell.

Based on the information received by the C-DU, and the ID of the candidate cell for which TA information has been received from the S-DU, the C-DU may decide to provide an RAR to the UE **110,** if the candidate cell is s current CLTM candidate. The C-DU may otherwise provide the TA information to the S-DU via the serving or source gNB-CU **208** or target gNB-CU.

As a second option, the RAR/TA information may be provided for current and subsequent CLTM candidate cells, and may be provided from the source or the target. Some examples in which the RAR/TA information is provided from the source may be similar to the first option described above. But in the second option, the UE **110** may not need information about whether a candidate cell is intra- or inter-CU. The UE may instead monitors for RAR/TA information only based on whether a condition for conditional cell switch to the candidate cell has been configured (for a switch from the source or any candidate cell). The S-DU (serving or source gNB-DU **210**) may also not need information about whether a candidate cell is intra- or inter-CU, and instead provide RAR/TA information if a condition for conditional cell switch to the candidate cell has been configured (for a switch from the source or any candidate cell).

In some examples, the LTM configuration may indicate a RAR monitoring configuration to the UE **110.** In some of these examples, the RAR monitoring configuration may indicate a list of cells that are configured with CLTM, and the cells that are configured for subsequent CLTM. In some examples, the current CLTM candidate cells may be determined by comparing whether the cells are intra-CU or inter-CU, or if a L3 or L1 condition is available for the candidate cell. In some examples, the subsequent CLTM candidate cells may be determined by the UE after decoding the candidate configurations. And in some examples, the subsequent CLTM candidate cells may be provided in a list to the UE.

Other examples of the second option, when the RAR/TA information is provided from the target, may be similar to the first option in which the RAR/TA information is provided from the target. In some examples of the second option, however, the UE **110** may not need information about whether a candidate cell is intra- or inter-CU. The UE may instead monitor for RAR/TA information only based on whether a condition for conditional cell switch to the candidate cell has been configured (for a switch from the source or any candidate cell). Likewise, the target gNB-DU **210** (T-DU) may not need information about whether a candidate cell is intra- or inter-CU, and provides the RAR if a condition for conditional cell switch to the candidate cell has been configured (for a switch from the source or any candidate cell). The T-DU may otherwise provide the TA information to the S-DU via the source gNB-CU or target gNB-CU.

In some examples, use of the first option or the second option may be dynamically configured to the UE **110,** such as through an RRC flag or an indication in the PDCCH order, based on its reported capability of the number of TAs the UE can maintain.

The first option may be used if the UE **110** does not keep TA values after a cell switch. The first option may also be used in cases in which the UE reports a capability of storing and maintaining a low number of TAs. For example, if the UE can maintain only one candidate cell TA value, this capability may be used for storing and maintaining TAs which are relevant for the upcoming cell switch, and not for TAs which are only potentially relevant for subsequent intra-(candidate) CU cell switches. Also, notably, the container of the TA information may be provided in a number of different manners, such as RAR, new MAC-CE, (modified) cell switch command, or the like.

Also, in examples of the first and second options in which the RAR/TA information is provided by the source, the serving or source gNB-CU **208** may send an indication to the source gNB-DU **210** to send the TA value in a RAR to the UE **110.** This may be used when the CU knows which cells are configured for subsequent conditional LTM, or which cells are configured with L3 based conditional LTM condition.

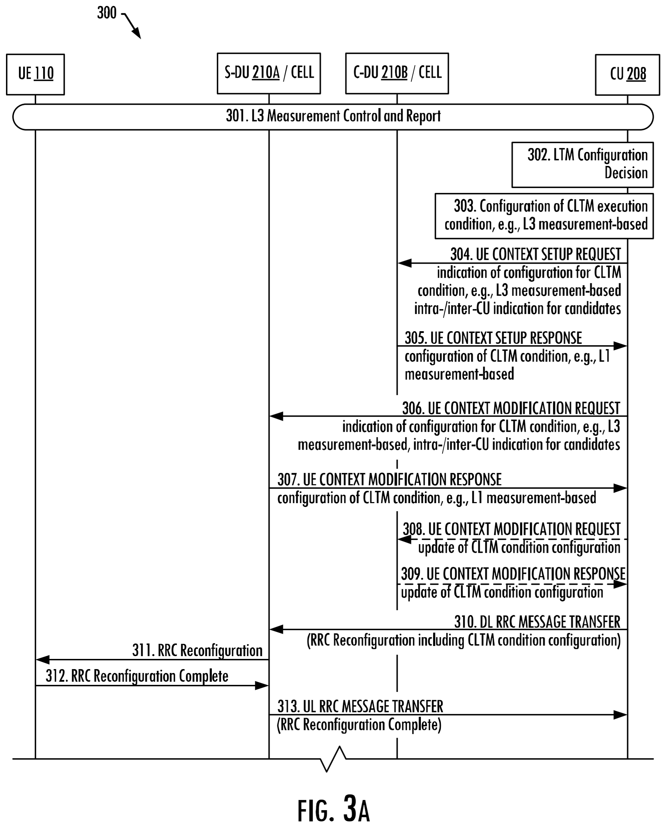

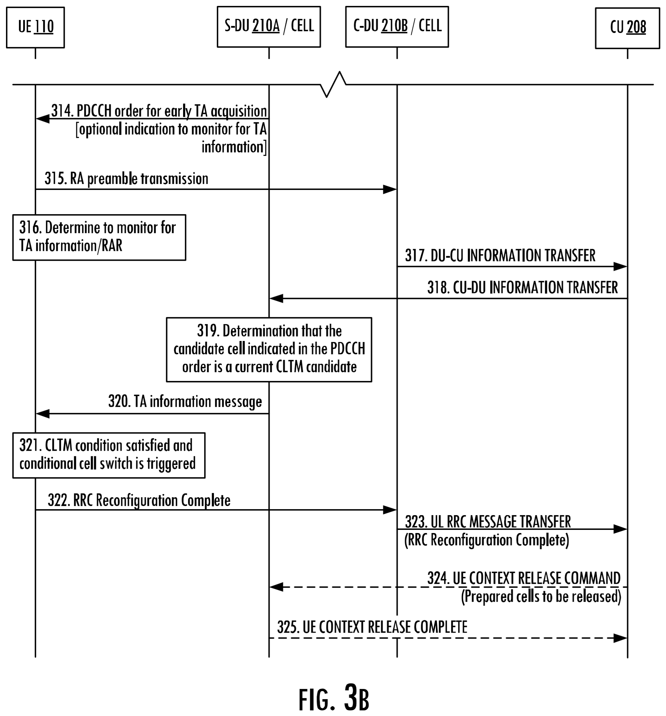

FIGS. 3A and 3B illustrate a signaling chart **300** for CLTM in which TA information for current CLTM candidate cells is provided to a UE **110** (the first option) by a source, according to some example implementations. As shown, the procedure involves a UE **110,** a CU **208** and a S-DU **210A** (supporting one or more cells) of a serving or source gNB **204,** as well as a C-DU **210B** (supporting one or more cells). For simplicity of exposition, the signaling chart illustrates an intra-CU setup in which the CU controls both the S-DU and the C-DU, with notable differences for an inter-CU setup involving a different CU (e.g., CU2) that controls the C-DU also provided, such as in the case of TA information transfer on the network side.

As shown at steps **301, 302** of FIG. 3A, the CU **208** prepares candidate cells for LTM based on (L3) measurement reports provided by the UE **110.** In some examples, the CU may at step **303** configure one or more CLTM conditions for the candidate cells. In an inter-CU setup, each CU may configure conditions for CLTM from a cell the CU controls to another candidate cell. In one example, these conditions may be L3 measurement-based conditions.

For each of the candidate cells supported by the C-DU **210B,** the CU **208** may at step **304** indicate to the C-DU a list of cells, and each cell in the list may be a candidate cell for which the CU has configured CLTM condition(s) for a cell switch from the candidate cell controlled by the C-DU to the candidate cell.

In some examples, the CU **208** may also indicate to the C-DU **210B** whether the candidate cells supported by other DUs are intra- or inter-CU cells. In some of these examples, the indication may include a one-bit flag per candidate cell supported by the other DUs. In some other examples, the indication may include Release 19 IDs of the candidate cells, which may be agreed to be used for determining whether security key update and PDCP reestablishment are needed during a cell switch. The C-DU may compare the Release 19 ID of a cell it controls when the cell is the serving cell with the Release 19 ID of a candidate cell; and if the IDs match, the C-DU may determine that the candidate cell is an intra-CU cell; otherwise, the candidate cell is an inter-CU cell.

For each of the candidate cells the C-DU **210B** supports, the C-DU may at step **305** configure L1 measurement-based CLTM condition(s) for a cell switch from the candidate cell the C-DU supports to another candidate cell, and send the L1 measurement-based CLTM condition(s) to the CU **208** so that the CU can include the condition(s) in the LTM configuration provided to the UE **110.**

At steps **306, 307,** the CU **208** and S-DU **210A** may perform the same steps **304, 305** performed for the S-DU **210A.**

The condition configurations can be updated at steps **308, 309,** such as based one cells are finally prepared as candidates. Alternatively, in some examples, the procedure for the CLTM condition configuration described in steps **304, 305** for C-DUs **210B** may occur at steps **308, 309.**

At steps **310, 311, 312, 313,** the LTM configuration including the CLTM condition configuration may be provided to the UE **110** in a RRC reconfiguration message, and the UE may send an RRC reconfiguration message to the CU **208.**

As shown in FIG. 3B, the S-DU **210A** may at step **314** send a PDCCH order to the UE **110** to perform a random access (RA) preamble transmission for early TA acquisition. In some examples, the PDCCH order may include an indication to the UE to monitor for RAR/TA information, such as using one of the reserved bits of the PDCCH order. The UE may at step **315** perform the RA preamble transmission as instructed in the PDCCH order to signal to the candidate cell to compute or otherwise determine a TA value for the candidate cell.

The UE may at step **316** make a determination to monitor for RAR/TA information reception. In some examples, the determination may be made based on a determination that the candidate cell indicated in the PDCCH order is a current CLTM candidate. That is, the determination may be made that a CLTM condition has been configured for cell switch from the current serving cell to the candidate cell indicated in the PDCCH order, and that a CLTM cell switch from the current serving cell to the candidate cell indicated in the PDCCH order is allowed, such as in the case the current serving cell and the candidate cell indicated in the PDCCH order are controlled by the same CU **208.** In some other examples, the determination may be made based on reception of the indication provided in the PDCCH order to monitor for RAR/TA information. The search space to monitor for PDCCH order may depend on the container used for TA information transfer.

As shown at steps **317, 318,** the C-DU **218B** may compute or otherwise determine the TA value based on the received RA preamble, and the C-DU may transfer the TA value to the S-DU **210A.**

The S-DU **210A** may at step **319** determine that the candidate cell indicated in the PDCCH order is a current CLTM candidate cell. That is, the S-DU may determine that a CLTM condition has been configured for cell switch from the current serving cell to the candidate cell indicated in the PDCCH order, and that a CLTM cell switch from the current serving cell to the candidate cell indicated in the PDCCH order is allowed, such as in the case the current serving cell and the candidate cell indicated in the PDCCH order are controlled by the same CU **208.**

The S-DU **210A** may at step **320** send a message including the TA value to the UE **110.** the container of the TA information may be provided in a number of different manners, such as RAR, new MAC-CE, (modified) cell switch command, or the like. And in the subsequent steps **321, 322, 323, 324** and **325,** the condition cell switch may be triggered at the UE, and a RACH-less conditional cell switch may be executed and completed.

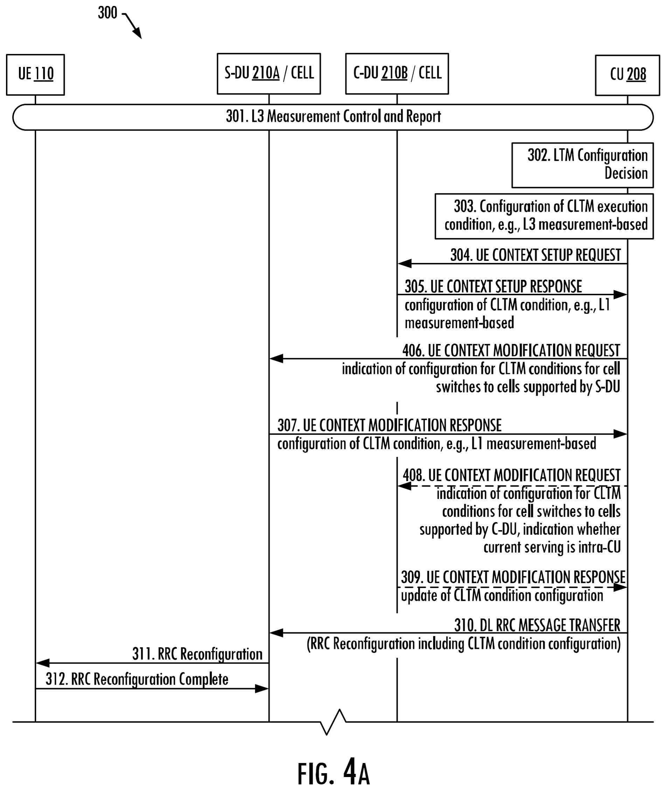

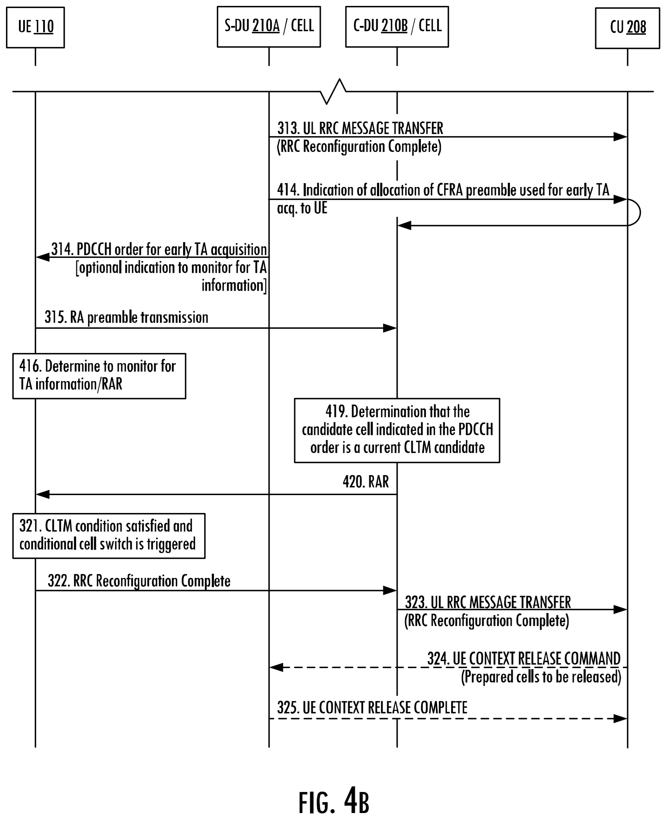

FIGS. 4A and 4B illustrate a signaling chart **400** for CLTM in which TA information for current CLTM candidate cells is provided to a UE (the first option) by a target, according to some example implementations. The CLTM in FIGS. 4A and 4B is shown with reference to steps in the CLTM in FIGS. 3A and 3B, with a number of notable differences described below.

As shown in FIG. 4A, for each cell supported by the S-DU **210A,** the CU **208** may at step **406** indicate to the S-DU **210A** a list of cells, and each cell in the list may be a candidate cell for which at least one CLTM condition has been configured for a cell switch from the candidate cell to the cell supported by the S-DU. Similarly, the CU may at step **408** indicate to the C-DU **210B** a list of candidate cells for which at least one CLTM condition has been configured for a cell switch from the candidate cell to the cell supported by the C-DU.

The CU **208** may also at step **408** indicate to the C-DU **210B** whether the current serving cell is intra-CU. In some examples, this information may be provided again to all C-DUs every time the serving cell changes or every time an inter-CU cell change occurs. In some examples, the indication may include a flag indicating intra- or inter-CU serving cell. In some other examples, the indication may include the ID of the current serving cell (e.g., GCI, candidate ID - if configured as candidate). This may be combined with information about whether a candidate cell is intra- or inter-CU for each candidate cell, such as by providing the Release 19 ID of the candidate cell or a flag indicating intra- or inter-CU cell.

As shown at step **414** of FIG. 4B, an indication of an allocation of a UE-specific CFRA preamble (provided to the UE at step **315** for early TA acquisition) may be provided from the S-DU **210A** to the C-DU **210B** via the CU **208.** The UE may at step **416** that the candidate cell is a current CLTM candidate cell and monitor for an RAR from the candidate cell. And the C-DU **210B** may at steps **419, 420** determine that the cell which received the RA preamble is a current CLTM candidate cell, and send an RAR to the UE.

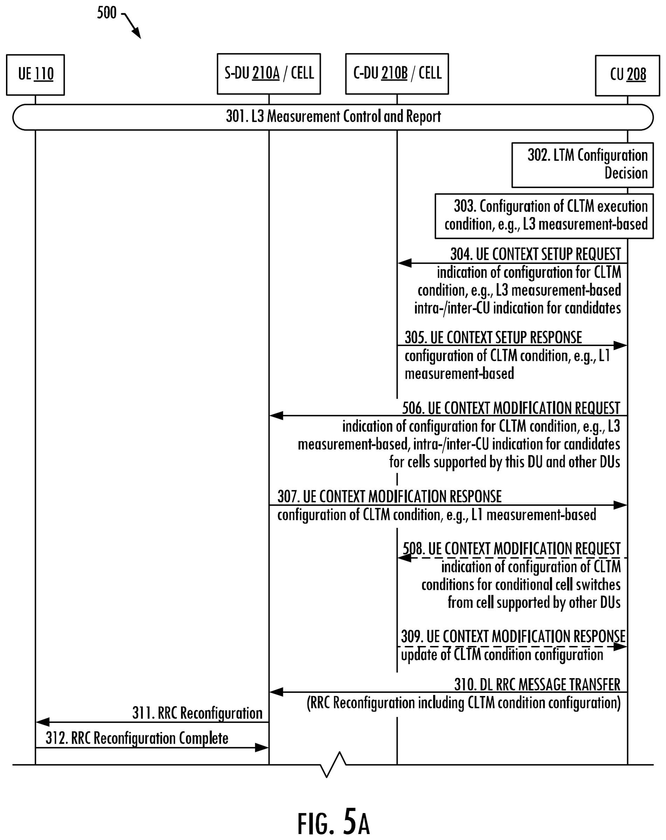

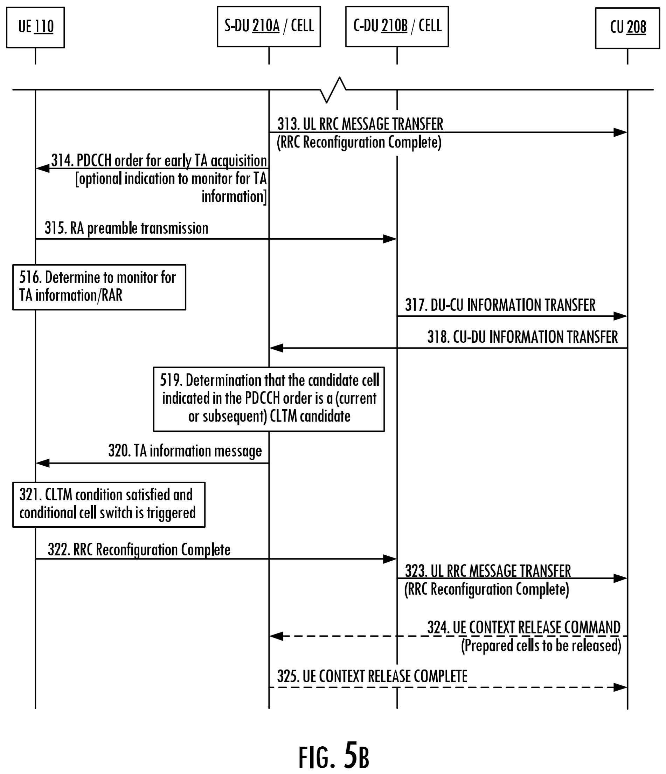

FIGS. 5A and 5B illustrate a signaling chart **500** for CLTM in which TA information for current and subsequent CLTM candidate cells is provided to a UE **110** (the second option) by a source, according to some example implementations. As before, the CLTM in FIGS. 5A and 5B is shown with reference to steps in the CLTM in FIGS. 3A and 3B, with a number of notable differences described below. In this regard, as shown at step **506** of FIG. 5B, apart from the information described with respect to step **306,** the S-DU **210A** may also receive an indication of configuration of CLTM conditions for cell switches from candidate cells supported by other DUs. Similarly, at step **508,** apart from the information described with respect to step **308,** the C-DU **210B** may also receive an indication of configuration of CLTM conditions for cell switches from candidate cells supported by other DUs.

The UE **110** may at step **516** make a determination to monitor for RAR/TA information reception. In some examples, the determination may be made based on a determination that the candidate cell indicated in the PDCCH order is a current or subsequent CLTM candidate. That is, the determination may be that a CLTM condition has been configured for cell switch from the current serving cell or another candidate cell to the candidate cell indicated in the PDCCH order. In some other examples, the determination may be made based on the reception of the indication provided in the PDCCH order to monitor for RAR/TA information. Again, the search space to monitor for PDCCH order may depend on the container used for TA information transfer.

The S-DU **210A** may at step **519** determine that the candidate cell indicated in the PDCCH order is a current or subsequent CLTM candidate cell. That is, the S-Du may determine that a CLTM condition has been configured for cell switch from the current serving cell or another candidate cell to the candidate cell indicated in the PDCCH order.

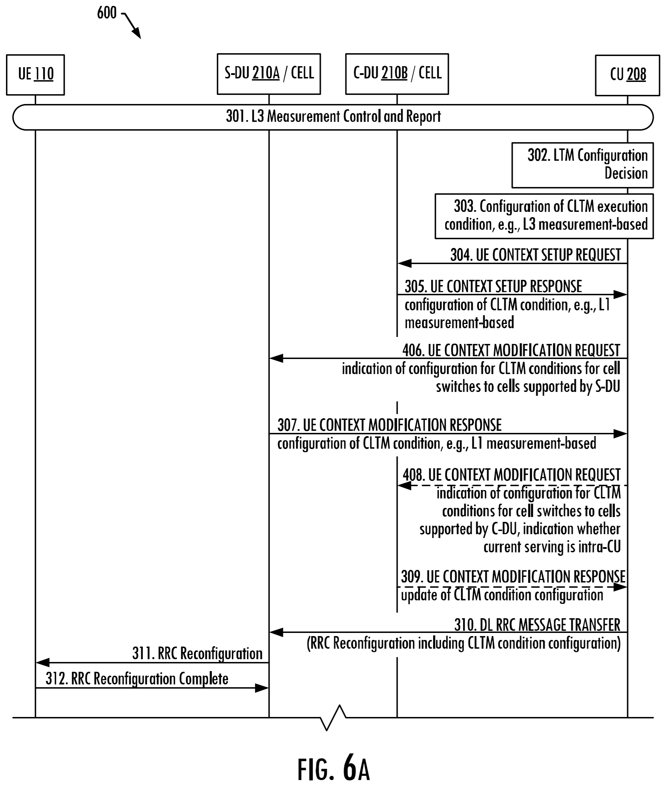

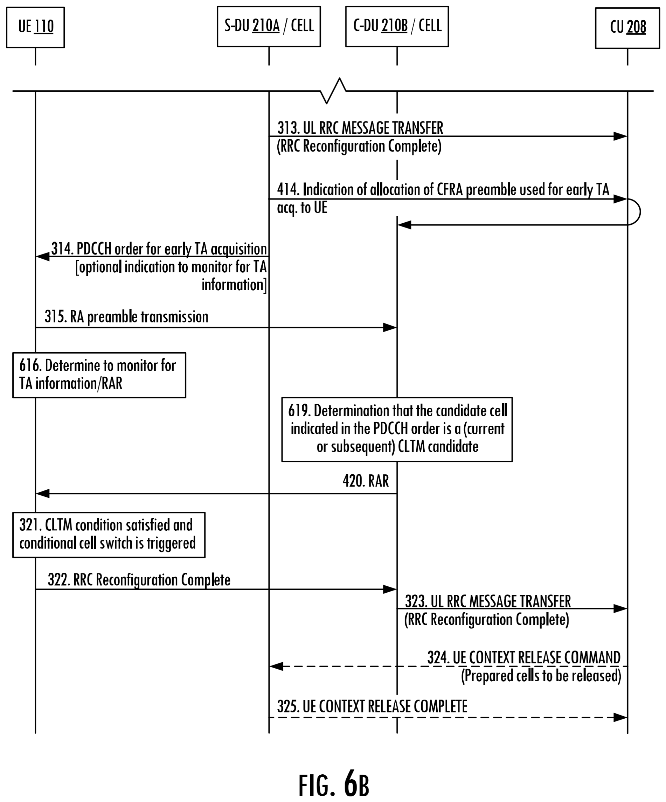

FIGS. 6A and 6B illustrate a signaling chart **600** for CLTM in which TA information for current and subsequent CLTM candidate cells is provided to a UE **110** (the second option) by a target, according to some example implementations. The CLTM in FIGS. 6A and 6B is shown with reference to steps in the CLTM in FIGS. 4A and 4B, with a number of notable differences described below.

As shown in FIG. 6B, at step **616,** the UE **110** may make a determination to monitor for RAR/TA information reception. In some examples, the determination may be made based on the determination that the candidate cell indicated in the PDCCH order is (current or subsequent) CLTM candidate. That is, the determination may be that a CLTM condition has been configured for cell switch from the current serving cell or another candidate cell to the candidate cell indicated in the PDCCH order. In some other examples, the determination may be made based on the reception of the indication provided in the PDCCH order to monitor for RAR/TA information. The search space to monitor for PDCCH order may depends on the container used for TA information transfer.

The C-DU **210B** may at step **619** make a determination that the candidate cell indicated in the PDCCH order is a current or subsequent CLTM candidate cell. That is, a determination may be made that a CLTM condition has been configured for cell switch from the current serving cell or another candidate cell to the candidate cell indicated in the PDCCH order.

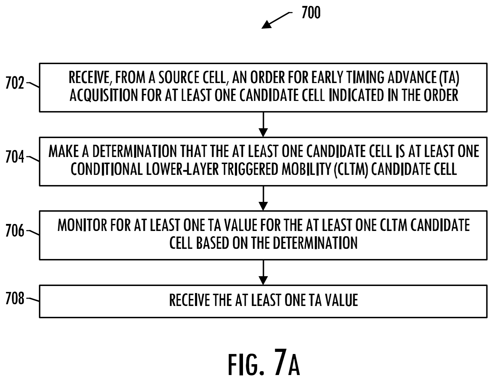

FIGS. 7A - 7C are flowcharts illustrating various steps in a method **700** performed by a user equipment (UE), according to various example implementations. The method includes receiving, from a source cell, an order for early timing advance (TA) acquisition for at least one candidate cell indicated in the order, as shown at block **702** of FIG. 7A. The method includes making a determination that the at least one candidate cell is at least one conditional lower-layer triggered mobility (CLTM) candidate cell, as shown at block **704.** The method includes monitoring for at least one TA value for the at least one CLTM candidate cell based on the determination, as shown at block **706.** And the method includes receiving the at least one TA value, as shown at block **708.**

In some examples, the order includes an indication for the UE to monitor for the at least one TA value.

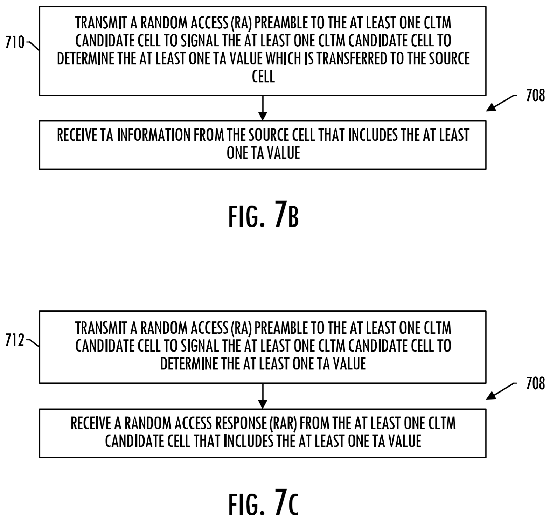

In some examples, the method **700** further includes transmitting a random access (RA) preamble to the at least one CLTM candidate cell to signal the at least one CLTM candidate cell to determine the at least one TA value which is transferred to the source cell, as shown at block **710** of FIG. 7B. In some of these examples, receiving the at least one TA value includes at block **708** receiving TA information from the source cell that includes the at least one TA value.

In some examples, the method **700** further includes transmitting a random access (RA) preamble to the at least one CLTM candidate cell to signal the at least one CLTM candidate cell to determine the at least one TA value, as shown at block **712** of FIG. 7C. In some of these examples, receiving at block **708** the at least one TA value includes receiving a random access response (RAR) from the at least one CLTM candidate cell that includes the at least one TA value.

In some examples, the determination is made at block **704** that each candidate cell of the at least one candidate cell indicated in the order is a current CLTM candidate cell.

In some examples, the determination is made at block **704** that the UE is configured with at least one condition for a conditional LTM cell switch from the source cell to the candidate cell, and that the candidate cell is controlled by a radio access node that also controls the source cell.

In some examples, the determination is made at block **704** that each candidate cell of the at least one candidate cell is a current CLTM candidate cell or a subsequent CLTM candidate cell.

In some examples, the determination is made at block **704** that the UE is configured with at least one condition for a conditional LTM cell switch from the source cell or another cell to the candidate cell.

In some examples, the UE is configured to monitor for at least one TA value for only current CLTM candidate cells, or for both current CLTM candidate cells and subsequent CLTM candidate cells.

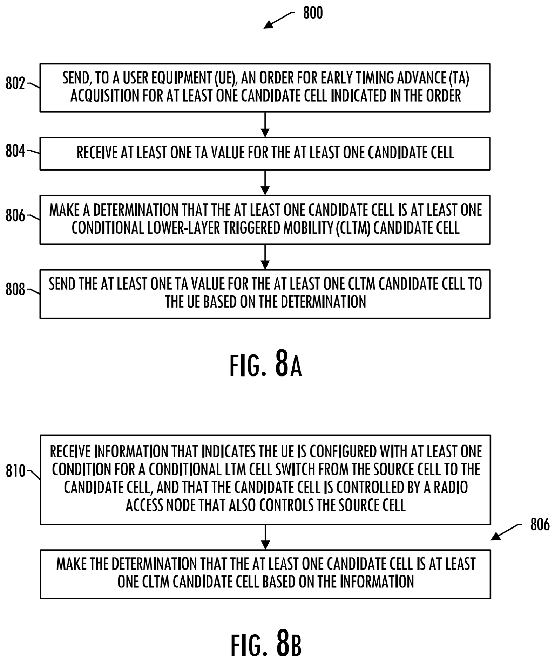

FIGS. 8A - 8D are flowcharts illustrating various steps in a method **800** according to various example implementations. The method includes sending, to a user equipment (UE), an order for early timing advance (TA) acquisition for at least one candidate cell indicated in the order, as shown at block **802** of FIG. 8A. The method includes receiving at least one TA value for the at least one candidate cell, as shown at block **804.** The method includes making a determination that the at least one candidate cell is at least one conditional lower-layer triggered mobility (CLTM) candidate cell, as shown at block **806.** And the method includes sending the at least one TA value for the at least one CLTM candidate cell to the UE based on the determination, as shown at block **808.**

In some examples, the order includes an indication for the UE to monitor for the at least one TA value.

In some examples, the order is to trigger the UE to transmit a random access (RA) preamble to the at least one CLTM candidate cell to signal the at least one CLTM candidate cell to determine the at least one TA value which is received. In some of these examples, sending the at least one TA value at block **808** includes sending TA information from the source cell that includes the at least one TA value.

In some examples, the determination is made at block **806** that each candidate cell of the at least one candidate cell indicated in the order is a current CLTM candidate cell.

In some examples, the method **800** further includes receiving information that indicates the UE is configured with at least one condition for a conditional LTM cell switch from the source cell to the candidate cell, and that the candidate cell is controlled by a radio access node that also controls the source cell, as shown at block **810** of FIG. 8B. In some of these examples, the determination is made at block **806** based on the information.

In some examples, the radio access node includes a centralized unit (CU) that controls a source DU supporting the source cell, and a candidate distributed unit (DU) supporting the candidate cell. In some of these examples, the method **800** is performed by the source DU, and the information is received by the source DU from the CU.

In some examples, the determination is made at block **806** that each candidate cell of the at least one candidate cell is a current CLTM candidate cell or a subsequent CLTM candidate cell.

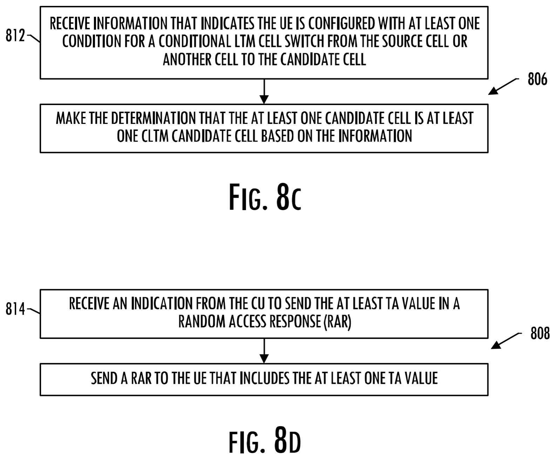

In some examples, the method **800** further includes receiving information that indicates the UE is configured with at least one condition for a conditional LTM cell switch from the source cell or another cell to the candidate cell, as shown at block **812** of FIG. 8C. In some of these examples, the determination is made at block **806** based on the information.

In some examples, the method **800** is performed by a source distributed unit (DU) that supports the source cell, and that is controlled by a centralized unit (CU). In some of these examples, the method further includes receiving an indication from the CU to send the at least TA value in a random access response (RAR), as shown at block **814** of FIG. 8D. And the method includes sending the at least one TA value at block **808** includes sending a RAR to the UE that includes the at least one TA value.

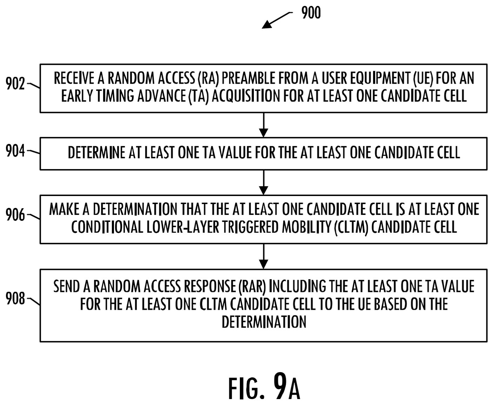

FIGS. 9A - 9C are flowcharts illustrating various steps in a method **900** according to various example implementations. The method includes receiving a random access (RA) preamble from a user equipment (UE) for an early timing advance (TA) acquisition for at least one candidate cell, as shown at block **902** of FIG. 9A. The method includes determining at least one TA value for the at least one candidate cell, as shown at block **904.** The method includes making a determination that the at least one candidate cell is at least one conditional lower-layer triggered mobility (CLTM) candidate cell, as shown at block **906.** And the method includes sending a random access response (RAR) including the at least one TA value for the at least one CLTM candidate cell to the UE based on the determination, as shown at block **908.**

In some examples, the determination is made at block **906** that each candidate cell of the at least one candidate cell indicated in the order is a current CLTM candidate cell.

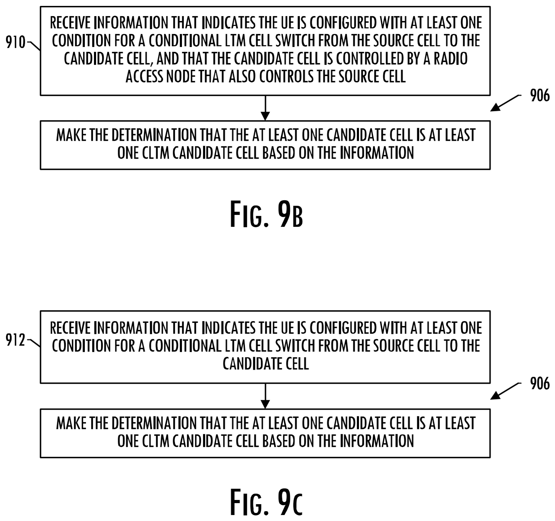

In some examples, the method **900** further includes receiving information that indicates the UE is configured with at least one condition for a conditional LTM cell switch from the source cell to the candidate cell, and that the candidate cell is controlled by a radio access node that also controls the source cell, as shown at block **910** of FIG. 9B. In some of these examples, the determination is made at block **906** based on the information.

In some examples, he radio access node includes a centralized unit (CU) that controls a source DU supporting the source cell, and a candidate distributed unit (DU) supporting the candidate cell. In some of these examples, the method is performed by the candidate DU, and the information is received at block **910** by the candidate DU from the CU.

In some examples, the determination is made at block **906** that each candidate cell of the at least one candidate cell is a current CLTM candidate cell or a subsequent CLTM candidate cell.

In some examples, the method **900** further includes receiving information that indicates the UE is configured with at least one condition for a conditional LTM cell switch from the source cell to the candidate cell, as shown at block **912** of FIG. 9C. In some of these examples, the determination is made at block **906** based on the information.

According to example implementations of the present disclosure, a telecommunications system **100** or PLMN **102,** and its components such as a UE **110,** CN **106,** RAN **108,** NG-RAN **202,** gNB **204,** 5GC **206,** CU **208,** DU **210,** S-DU **210A** and/or C-DU **210B,** may be implemented by various means. Means for implementing the system and its components may include hardware, firmware, software, or combinations thereof. In some examples, one or more apparatuses may be configured to function as or otherwise implement the system and its components shown and described herein. In examples involving more than one apparatus, the respective apparatuses may be connected to or otherwise in communication with one another in a number of different manners, such as directly or indirectly via a wired or wireless network or the like.

According to some example implementations, at least some of the method **700** described with respect to FIGS. 7A - 7C may be carried out by an apparatus comprising means for performing functions corresponding steps of the method. Similarly, at least some of the method **800** described with respect to FIGS. 8A - 8D may be carried out by an apparatus comprising means for performing functions corresponding steps of the method. And at least some of the method **900** described with respect to FIGS. 9A - 9C may be carried out by an apparatus comprising means for performing functions corresponding steps of the method. Examples of a suitable apparatus may include a user equipment, user device, user terminal or the like. Other examples of a suitable apparatus may include a gNB (e.g., gNB-DU, gNB-CU), ng-eNB or any suitable apparatus, such as a server, host or node.

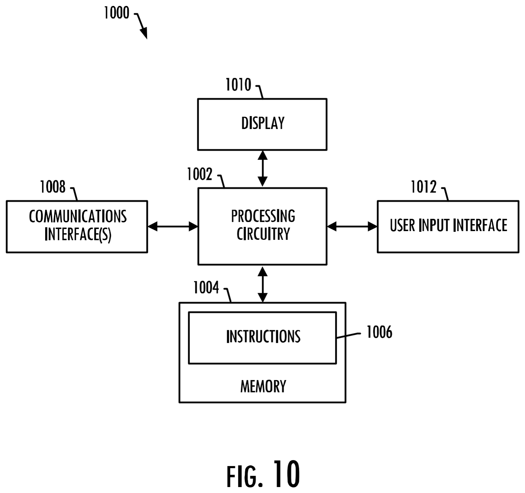

FIG. 10 illustrates an apparatus **1000** in which means for performing various functions includes hardware, alone or under direction of one or more computer programs from a computer-readable storage medium or other memory, such as computer memory, according to some example implementations of the present disclosure. Generally, an apparatus of example implementations of the present disclosure may comprise, include or be embodied in one or more fixed or portable electronic devices. Examples of suitable electronic devices include a wearable computer, mobile phone, portable computer, desktop computer, workstation computer, server (server computer) or the like. The apparatus may include one or more of each of a number of components such as, for example, processing circuitry **1002** connected to computer-readable storage medium or other memory **1004.**

The processing circuitry **1002** may be composed of one or more processors alone or in combination with one or more computer-readable storage media. The processing circuitry is generally any piece of computer hardware that is capable of processing information such as, for example, data, computer programs and/or other suitable electronic information. The processing circuitry is composed of a collection of electronic circuits some of which may be packaged as an integrated circuit or multiple interconnected integrated circuits (an integrated circuit at times more commonly referred to as a "chip"). The processing circuitry may be configured to execute computer programs, which may be stored onboard the processing circuitry or otherwise stored in the memory **1004** (of the same or another apparatus).

The processing circuitry **1002** may be a number of processors, a multi-core processor or some other type of processor, depending on the particular implementation. Further, the processing circuitry may be implemented using a number of heterogeneous processor systems in which a main processor is present with one or more secondary processors on a single chip. As another illustrative example, the processing circuitry may be a symmetric multi-processor system containing multiple processors of the same type. In yet another example, the processing circuitry may be embodied as or otherwise include one or more ASICs, FPGAs or the like. Thus, although the processing circuitry may be capable of executing a computer program to perform one or more functions, the processing circuitry of various examples may be capable of performing one or more functions without the aid of a computer program. In either instance, the processing circuitry may be appropriately programmed to perform functions or operations according to example implementations of the present disclosure.

The memory **1004** is generally any piece of computer hardware that is capable of storing information such as, for example, data, computer programs, instructions **1006** (e.g., computer-readable program code) and/or other suitable information either on a temporary basis and/or a permanent basis. The memory may include volatile and/or non-volatile memory, and may be fixed or removable. Examples of suitable memory include recording media, random access memory (RAM), read-only memory (ROM), a hard drive, a flash memory, a thumb drive, a removable computer diskette, an optical disk or some combination thereof.

The memory **1004** is a non-transitory device capable of storing information. One example of a suitable memory is a computer-readable storage medium, which is distinguishable from a computer-readable transmission medium capable of carrying information from one location to another. Examples of suitable computer-readable transmission media comprise electronic carrier signals, telecommunications signals, or some combination thereof. As used herein, the term "non-transitory" is a limitation of the medium itself (i.e., tangible, not a signal) as opposed to a limitation on data storage persistency (e.g., RAM versus ROM). A computer-readable medium as described herein generally refers to a computer-readable storage medium or computer-readable transmission medium. A computer-readable medium is any entity or device capable in which information, such as one or more computer programs or portions thereof, may be stored and carried.

In addition to the memory **1004** (e.g., computer-readable storage medium), the processing circuitry **1002** may also be connected to one or more interfaces for displaying, transmitting and/or receiving information. The interfaces may include a communications interface **1008** and/or one or more user interfaces. The communications interface may be configured to transmit and/or receive information, such as to and/or from other apparatus(es), network(s) or the like. The communications interface may be configured to transmit and/or receive information by physical (wired) and/or wireless communications links. Examples of suitable communication interfaces include a network interface controller (NIC), wireless NIC (WNIC) or the like.

The user interfaces may include a display **1010** and/or one or more user input interfaces **1012.** The display may be configured to present or otherwise display information to a user, suitable examples of which include a liquid crystal display (LCD), light-emitting diode (LED) display, organic LED (OLED) display, active-matrix OLED (AMOLED) or the like. The user input interfaces may be wired or wireless, and may be configured to receive information from a user into the apparatus, such as for processing, storage and/or display. Suitable examples of user input interfaces include a microphone, image or video capture device, keyboard or keypad, joystick, touch-sensitive surface (separate from or integrated into a touchscreen), biometric sensor or the like. The user interfaces may further include one or more interfaces for communicating with peripherals such as printers, scanners or the like.

Execution of the instructions **1006** by the processing circuitry **1002,** or storage of the instructions in the memory **1004,** supports combinations of operations for implementing example implementations of the present disclosure. In this manner, an apparatus **1000** may comprise at least one processing circuitry and at least one memory coupled to the at least one processing circuitry, where the at least one processing circuitry is configured to execute instructions stored in the at least one memory. It will also be understood that one or more functions, and combinations of functions, may be implemented by special purpose hardware-based computer systems and/or processing circuitry which perform the specified functions, or combinations of special purpose hardware and program code instructions.

Some example implementations of the present disclosure may also be carried out in the form of a computer process defined by one or more computer programs or portions thereof. Example implementations of the present disclosure may be carried out by executing at least one portion of a computer program comprising instructions. The computer program may be in source code form, object code form, or in some intermediate form. The computer program may be stored in a computer-readable medium that is readable by a computer, processing circuitry or other suitable apparatus. As indicated above, for example, the computer program may be stored in a memory, such as a computer-readable storage medium. Additionally or alternatively, for example, the computer program may be stored in a computer-readable transmission medium. The coding of software for carrying out example implementations of the present disclosure is well within the scope of a person of ordinary skill in the art.

As will be appreciated, any suitable instructions may be loaded onto a computer, a processing circuitry or other programmable apparatus from a memory or a computer-readable medium (e.g., computer-readable storage medium, computer-readable transmission medium) to produce a particular machine, such that the particular machine becomes a means for implementing the functions specified herein. The instructions may also be stored in a computer-readable medium that can direct a computer, a processing circuitry or other programmable apparatus to function in a particular manner to thereby generate a particular machine or particular article of manufacture. In some examples, the instructions stored in the computer-readable medium may produce an article of manufacture, where the article of manufacture becomes a means for implementing functions described herein. The instructions may be retrieved from a computer-readable medium and loaded into a computer, processing circuitry or other programmable apparatus to configure the computer, processing circuitry or other programmable apparatus to execute operations to be performed on or by the computer, processing circuitry or other programmable apparatus.

Retrieval, loading and execution of instructions comprising program code instructions may be performed sequentially such that one instruction is retrieved, loaded and executed at a time. In some example implementations, retrieval, loading and/or execution may be performed in parallel such that multiple instructions are retrieved, loaded, and/or executed together. Execution of the program code instructions may produce a computer-implemented process such that the instructions executed by the computer, processing circuitry or other programmable apparatus provide operations for implementing functions described herein.

As explained above and reiterated below, the present disclosure includes, without limitation, the following example implementations.

Clause 1. A method performed by a user equipment (UE), the method comprising: receiving, from a source cell, an order for early timing advance (TA) acquisition for at least one candidate cell indicated in the order; making a determination that the at least one candidate cell is at least one conditional lower-layer triggered mobility (CLTM) candidate cell; monitoring for at least one TA value for the at least one CLTM candidate cell based on the determination; and receiving the at least one TA value.

Clause 2. The method of clause 1, wherein the order includes an indication for the UE to monitor for the at least one TA value.

Clause 3. The method of clause 1 or clause 2, wherein the method further comprises transmitting a random access (RA) preamble to the at least one CLTM candidate cell to signal the at least one CLTM candidate cell to determine the at least one TA value which is transferred to the source cell, and wherein receiving the at least one TA value includes receiving TA information from the source cell that includes the at least one TA value.

Clause 4. The method of any of clauses 1 to 3, wherein the method further comprises transmitting a random access (RA) preamble to the at least one CLTM candidate cell to signal the at least one CLTM candidate cell to determine the at least one TA value, and wherein receiving the at least one TA value includes receiving a random access response (RAR) from the at least one CLTM candidate cell that includes the at least one TA value.

Clause 5. The method of any of clauses 1 to 4, wherein the determination is made that each candidate cell of the at least one candidate cell indicated in the order is a current CLTM candidate cell.

Clause 6. The method of clause 5, wherein the determination is made that the UE is configured with at least one condition for a conditional LTM cell switch from the source cell to the candidate cell, and that the candidate cell is controlled by a radio access node that also controls the source cell.

Clause 7. The method of any of clauses 1 to 6, wherein the determination is made that each candidate cell of the at least one candidate cell is a current CLTM candidate cell or a subsequent CLTM candidate cell.

Clause 8. The method of clause 7, wherein the determination is made that the UE is configured with at least one condition for a conditional LTM cell switch from the source cell or another cell to the candidate cell.

Clause 9. The method of any of clauses 1 to 8, wherein the UE is configured to monitor for at least one TA value for only current CLTM candidate cells, or for both current CLTM candidate cells and subsequent CLTM candidate cells.

Clause 10. An apparatus comprising: at least one memory configured to store instructions; and at least one processing circuitry configured to access the at least one memory, and execute the instructions to cause the apparatus to perform the method of any of clauses 1 to 9.

Clause 11. An apparatus comprising means for performing the method of any of clauses 1 to 9.

Clause 12. A computer-readable medium comprising instructions that, in response to execution by at least one processing circuitry, causes an apparatus to perform the method of any of clauses 1 to 9.

Clause 13. A computer-readable storage medium comprising instructions that, in response to execution by at least one processing circuitry, causes an apparatus to perform the method of any of clauses 1 to 9.

Clause 14. A computer program comprising instructions that, in response to execution by at least one processing circuitry, causes an apparatus to perform the method of any of clauses 1 to 9.

Clause 15. A method comprising: sending, to a user equipment (UE), an order for early timing advance (TA) acquisition for at least one candidate cell indicated in the order; receiving at least one TA value for the at least one candidate cell; making a determination that the at least one candidate cell is at least one conditional lower-layer triggered mobility (CLTM) candidate cell; and sending the at least one TA value for the at least one CLTM candidate cell to the UE based on the determination.

Clause 16. The method of clause 15, wherein the order includes an indication for the UE to monitor for the at least one TA value.

Clause 17. The method of clause 15 or clause 16, wherein the order is to trigger the UE to transmit a random access (RA) preamble to the at least one CLTM candidate cell to signal the at least one CLTM candidate cell to determine the at least one TA value which is received, and wherein sending the at least one TA value includes sending TA information from the source cell that includes the at least one TA value.

Clause 18. The method of any of clauses 15 to 17, wherein the determination is made that each candidate cell of the at least one candidate cell indicated in the order is a current CLTM candidate cell.

Clause 19. The method of clause 18, wherein the method further comprises receiving information that indicates the UE is configured with at least one condition for a conditional LTM cell switch from the source cell to the candidate cell, and that the candidate cell is controlled by a radio access node that also controls the source cell, and wherein the determination is made based on the information.

Clause 20. The method of clause 19, wherein the radio access node includes a centralized unit (CU) that controls a source DU supporting the source cell, and a candidate distributed unit (DU) supporting the candidate cell, and wherein the method is performed by the source DU, and the information is received by the source DU from the CU.

Clause 21. The method of any of clauses 15 to 20, wherein the determination is made that each candidate cell of the at least one candidate cell is a current CLTM candidate cell or a subsequent CLTM candidate cell.

Clause 22. The method of clause 21, wherein the method further comprises receiving information that indicates the UE is configured with at least one condition for a conditional LTM cell switch from the source cell or another cell to the candidate cell, and wherein the determination is made based on the information.

Clause 23. The method of any of clauses 15 to 22, wherein the method is performed by a source distributed unit (DU) that supports the source cell, and that is controlled by a centralized unit (CU), and wherein the method further comprises receiving an indication from the CU to send the at least TA value in a random access response (RAR), and sending the at least one TA value includes sending a RAR to the UE that includes the at least one TA value.

Clause 24. An apparatus comprising: at least one memory configured to store instructions; and at least one processing circuitry configured to access the at least one memory, and execute the instructions to cause the apparatus to perform the method of any of clauses 15 to 23.

Clause 25. An apparatus comprising means for performing the method of any of clauses 15 to 23.

Clause 26. A computer-readable medium comprising instructions that, in response to execution by at least one processing circuitry, causes an apparatus to perform the method of any of clauses 15 to 23.

Clause 27. A computer-readable storage medium comprising instructions that, in response to execution by at least one processing circuitry, causes an apparatus to perform the method of any of clauses 15 to 23.

Clause 28. A computer program comprising instructions that, in response to execution by at least one processing circuitry, causes an apparatus to perform the method of any of clauses 15 to 23.

Clause 29. A method comprising: receiving a random access (RA) preamble from a user equipment (UE) for an early timing advance (TA) acquisition for at least one candidate cell; determining at least one TA value for the at least one candidate cell; making a determination that the at least one candidate cell is at least one conditional lower-layer triggered mobility (CLTM) candidate cell; and sending a random access response (RAR) including the at least one TA value for the at least one CLTM candidate cell to the UE based on the determination.

Clause 30. The method of clause 29, wherein the determination is made that each candidate cell of the at least one candidate cell indicated in the order is a current CLTM candidate cell.

Clause 31. The method of clause 30, wherein the method further comprises receiving information that indicates the UE is configured with at least one condition for a conditional LTM cell switch from the source cell to the candidate cell, and that the candidate cell is controlled by a radio access node that also controls the source cell, and wherein the determination is made based on the information.

Clause 32. The method of clause 31, wherein the radio access node includes a centralized unit (CU) that controls a source DU supporting the source cell, and a candidate distributed unit (DU) supporting the candidate cell, and wherein the method is performed by the candidate DU, and the information is received by the candidate DU from the CU.

Clause 33. The method of any of clauses 29 to 32, wherein the determination is made that each candidate cell of the at least one candidate cell is a current CLTM candidate cell or a subsequent CLTM candidate cell.

Clause 34. The method of clause 33, wherein the method further comprises receiving information that indicates the UE is configured with at least one condition for a conditional LTM cell switch from the source cell to the candidate cell, and wherein the determination is made based on the information.

Clause 35. An apparatus comprising: at least one memory configured to store instructions; and at least one processing circuitry configured to access the at least one memory, and execute the instructions to cause the apparatus to perform the method of any of clauses 29 to 34.

Clause 36. An apparatus comprising means for performing the method of any of clauses 29 to 34.

Clause 37. A computer-readable medium comprising instructions that, in response to execution by at least one processing circuitry, causes an apparatus to perform the method of any of clauses 29 to 34.

Clause 38. A computer-readable storage medium comprising instructions that, in response to execution by at least one processing circuitry, causes an apparatus to perform the method of any of clauses 29 to 34.

Clause 39. A computer program comprising instructions that, in response to execution by at least one processing circuitry, causes an apparatus to perform the method of any of clauses 29 to 34.

Many modifications and other implementations of the disclosure set forth herein will come to mind to one skilled in the art to which the disclosure pertains having the benefit of the teachings presented in the foregoing description and the associated figures. Therefore, it is to be understood that the disclosure is not to be limited to the specific implementations disclosed and that modifications and other implementations are intended to be included within the scope of the appended claims. Moreover, although the foregoing description and the associated figures describe example implementations in the context of certain example combinations of elements and/or functions, it should be appreciated that different combinations of elements and/or functions may be provided by alternative implementations without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. An apparatus to implement a user equipment,UE, the apparatus comprising:
at least one memory configured to store instructions; and
at least one processing circuitry configured to access the at least one memory, and execute the instructions to cause the apparatus to at least:
receive, from a source cell, an order for early timing advance, TA, acquisition for at least one candidate cell indicated in the order;
make a determination that the at least one candidate cell is at least one conditional lower-layer triggered mobility, CLTM, candidate cell;
monitor for at least one TA value for the at least one CLTM candidate cell based on the determination; and
receive the at least one TA value.

2. The apparatus of claim 1, wherein the order includes an indication for the UE to monitor for the at least one TA value.

3. The apparatus of claim 1 or claim 2, wherein the at least one processing circuitry is configured to execute the instructions to cause the apparatus to further transmit a random access, RA,preamble to the at least one CLTM candidate cell to signal the at least one CLTM candidate cell to determine the at least one TA value which is transferred to the source cell, and
wherein the apparatus caused to receive the at least one TA value includes the apparatus caused to receive TA information from the source cell that includes the at least one TA value.

4. The apparatus of any of claims 1 to 3, wherein the at least one processing circuitry is configured to execute the instructions to cause the apparatus to further transmit a random access, RA, preamble to the at least one CLTM candidate cell to signal the at least one CLTM candidate cell to determine the at least one TA value, and
wherein the apparatus caused to receive the at least one TA value includes the apparatus caused to receive a random access response, RAR, from the at least one CLTM candidate cell that includes the at least one TA value.

5. The apparatus of any of claims 1 to 4, wherein the determination is made that each candidate cell of the at least one candidate cell indicated in the order is a current CLTM candidate cell.

6. The apparatus of claim 5, wherein the determination is made that the UE is configured with at least one condition for a conditional LTM cell switch from the source cell to the candidate cell, and that the candidate cell is controlled by a radio access node that also controls the source cell.

7. The apparatus of any of claims 1 to 6, wherein the determination is made that each candidate cell of the at least one candidate cell is a current CLTM candidate cell or a subsequent CLTM candidate cell.

8. The apparatus of claim 7, wherein the determination is made that the UE is configured with at least one condition for a conditional LTM cell switch from the source cell or another cell to the candidate cell.

9. The apparatus of any of claims 1 to 8, wherein the UE is configured to monitor for at least one TA value for only current CLTM candidate cells, or for both current CLTM candidate cells and subsequent CLTM candidate cells.

10. An apparatus comprising:
at least one memory configured to store instructions; and
at least one processing circuitry configured to access the at least one memory, and execute the instructions to cause the apparatus to at least:
send, to a user equipment, UE, an order for early timing advance, TA, acquisition for at least one candidate cell indicated in the order;
receive at least one TA value for the at least one candidate cell;
make a determination that the at least one candidate cell is at least one conditional lower-layer triggered mobility, CLTM, candidate cell; and
send the at least one TA value for the at least one CLTM candidate cell to the UE based on the determination.

11. The apparatus of claim 10, wherein the determination is made that each candidate cell of the at least one candidate cell indicated in the order is a current CLTM candidate cell.

12. The apparatus of claim 11, wherein the at least one processing circuitry is configured to execute the instructions to cause the apparatus to further receive information that indicates the UE is configured with at least one condition for a conditional LTM cell switch from the source cell to the candidate cell, and that the candidate cell is controlled by a radio access node that also controls the source cell, and
wherein the determination is made based on the information.

13. The apparatus of claim 12, wherein the radio access node includes a centralized unit (CU) that controls a source DU supporting the source cell, and a candidate distributed unit (DU) supporting the candidate cell, and
wherein the apparatus is to implement the source DU, and the information is received by the source DU from the CU.

14. The apparatus of any of claims 10 to 13, wherein the determination is made that each candidate cell of the at least one candidate cell is a current CLTM candidate cell or a subsequent CLTM candidate cell.

15. An apparatus comprising:
at least one memory configured to store instructions; and
at least one processing circuitry configured to access the at least one memory, and execute the instructions to cause the apparatus to at least:
receive a random access, RA, preamble from a user equipment, UE, for an early timing advance,TA, acquisition for at least one candidate cell;
determine at least one TA value for the at least one candidate cell;
make a determination that the at least one candidate cell is at least one conditional lower-layer triggered mobility, CLTM, candidate cell; and
send a random access response, RAR, including the at least one TA value for the at least one CLTM candidate cell to the UE based on the determination.
